# DEMANDE DE BREVET EUROPEEN

(11) **EP 4 826 228 A1**
(43) Date de publication de la demande: **21.10.2026**
(21) Numéro de dépôt: 26171956.1
(22) Date de dépôt: 13.04.2026
(51) Int. Cl.: F02C 3/22, F02C 7/16, F02C 7/224, F02C 7/236

(54) **SYSTÈME D'ALIMENTATION DE CARBURANT POUR UN SYSTÈME DE PROPULSION POUR AÉRONEF**

(30) Priorité: 17.04.2025 FR 2504113
(71) Demandeur: Airbus Operations S.A.S., 31060 Toulouse (FR)
(72) Inventeur: RAVENEAU, Guillaume, 31060 TOULOUSE (FR); BELLEVILLE, Mathieu, 31060 TOULOUSE (FR)
(74) Mandataire: Cabinet Le Guen Maillet

(57) **Abrégé**

L'invention concerne un système (2) d'alimentation de carburant pour un système de propulsion (10) pour un aéronef (1) comportant successivement et relié fluidiquement :
- un réservoir (21) cryogénique contenant du dihydrogène à l'état liquide ;
- une pompe basse pression (22) ;
- une pompe haute pression (23) ;
- un échangeur thermique (24) ;
- un clapet anti-retour (25) ;
- un réservoir tampon (26) destiné à contenir du dihydrogène à l'état gazeux ;
- une vanne de régulation de débit (27) ;
- une chambre de combustion (28) ; et
- un circuit de recirculation (29) reliant ladite pompe basse pression (22) et ledit réservoir (21).

Un tel système permet d'optimiser l'utilisation du dihydrogène pour le refroidissement du système d'alimentation en carburant. Cela permet de minimiser la quantité de dihydrogène rejetée dans l'atmosphère au cours du refroidissement, limitant ainsi l'impact sur le climat et les risques de sécurité.

## Description

### DOMAINE TECHNIQUE

La présente invention concerne un système d'alimentation de carburant pour un système de propulsion comportant un moteur à combustion alimenté en dihydrogène. L'invention concerne également un système de propulsion comportant un tel système d'alimentation de carburant ainsi qu'un aéronef comportant un tel système de propulsion. L'invention concerne également un procédé de fonctionnement d'un tel système d'alimentation de carburant.

### ÉTAT DE LA TECHNIQUE ANTÉRIEURE

Afin de réduire la pollution engendrée par l'utilisation de kérosène lors de l'utilisation d'un aéronef, il se développe des aéronefs dont les moteurs sont alimentés en dihydrogène. Plus particulièrement, le dihydrogène est utilisé pour alimenter une chambre de combustion dans laquelle le dihydrogène est brûlé de sorte à générer une énergie motrice et faire tourner le moteur à combustion interne de l'aéronef pour générer la poussée de l'aéronef. Généralement, du dihydrogène liquide est stocké dans un réservoir cryogénique avant d'être transporté puis injecté dans son état gazeux dans la chambre de combustion du moteur.

Ce dihydrogène liquide peut également être utilisé dans le processus de refroidissement de certains éléments du système de propulsion. En particulier, le dihydrogène liquide stocké dans le réservoir cryogénique peut être utilisé pour refroidir un système utilisant du carburant, par exemple pour assurer une livraison de dihydrogène liquide à une pompe à dihydrogène liquide et/ou au niveau du système de propulsion. Pour ce faire, le dihydrogène liquide circule dans les conduites d'alimentation du système d'alimentation en carburant de sorte à absorber l'énergie calorifique de ces dernières et à permettre une réduction de la température de ces conduites. Avec la chaleur absorbée, le dihydrogène liquide change d'état et devient gazeux. Le dihydrogène gazeux produit lors du processus de refroidissement peut ensuite être évacué dans l'atmosphère (par exemple par un système de mise à l'air libre).

Cette solution présente toutefois des risques de sécurité puisque le rejet de dihydrogène peut créer des conditions inflammables si ce dernier se mélange avec de l'oxygène, ce qui n'est évidemment pas satisfaisant. En effet, le mélange d'oxygène et de dihydrogène ne nécessite qu'une très faible énergie minimale d'inflammation dans une plage de concentration de dihydrogène étendue (généralement de l'ordre de 4 à 74% de concentration dans l'air). L'allumage immédiat ou décalé de dihydrogène peut entraîner une flamme ou une explosion susceptible d'entraîner des dommages importants, que ce soit sur le système de propulsion ou bien même sur l'aéronef.

En outre, un tel rejet de dihydrogène dans l'atmosphère présente un impact négatif sur le climat en raison de l'effet de réchauffement engendré par un tel rejet dans l'atmosphère.

Par ailleurs, cette solution présente un coût élevé puisqu'une quantité non négligeable de dihydrogène est perdue au moment du rejet dans l'atmosphère lors du processus de refroidissement.

Il existe donc un besoin de fournir une nouvelle solution permettant d'améliorer le processus de refroidissement par dihydrogène du système d'alimentation en carburant d'un aéronef.

### EXPOSÉ DE L'INVENTION

Un objet de la présente invention est de proposer un système d'alimentation de carburant dont la consommation de dihydrogène est optimisée.

À cet effet, est proposé un système d'alimentation de carburant pour un système de propulsion pour aéronef comportant :
- un réservoir cryogénique contenant du carburant, où ledit carburant est du dihydrogène liquide, ledit réservoir cryogénique comportant un premier orifice d'entrée et un premier orifice de sortie ;
- une pompe basse pression, située en aval dudit réservoir, comportant un deuxième orifice d'entrée fluidiquement relié audit premier orifice de sortie dudit réservoir et un deuxième orifice de sortie ;
- une pompe haute pression, située en aval de ladite pompe basse pression, comportant un troisième orifice d'entrée fluidiquement relié audit deuxième orifice de sortie de ladite pompe basse pression et un troisième orifice de sortie ;
- un échangeur thermique, situé en aval de ladite pompe haute pression comportant un quatrième orifice d'entrée fluidiquement relié audit troisième orifice de sortie de ladite pompe haute pression et un quatrième orifice de sortie ;
- un clapet anti-retour, situé en aval dudit échangeur thermique, comportant un cinquième orifice d'entrée fluidiquement relié audit quatrième orifice de sortie dudit échangeur thermique et un cinquième orifice de sortie ;
- un réservoir tampon destiné à contenir du dihydrogène gazeux, ledit réservoir tampon étant situé en aval dudit clapet anti-retour et comportant un sixième orifice d'entrée fluidiquement relié audit cinquième orifice de sortie dudit clapet anti-retour et un sixième orifice de sortie ;
- une vanne de régulation de débit, située en aval dudit réservoir tampon, comportant un septième orifice d'entrée fluidiquement relié audit sixième orifice de sortie dudit réservoir tampon et un septième orifice de sortie ;
- une chambre de combustion, située en aval de ladite vanne de régulation de débit, comportant un huitième orifice d'entrée fluidiquement relié audit septième orifice de sortie de ladite vanne de régulation de débit ; et
- un circuit de recirculation comportant un neuvième orifice d'entrée fluidiquement relié audit deuxième orifice de sortie de ladite pompe basse pression et un neuvième orifice de sortie fluidiquement relié audit premier orifice d'entrée dudit réservoir.

Un tel système permet d'optimiser l'utilisation du dihydrogène pour le refroidissement du système d'alimentation en carburant. Cela permet de minimiser la quantité de dihydrogène rejetée dans l'atmosphère au cours du refroidissement, limitant ainsi l'impact sur le climat et les risques de sécurité.

Avantageusement, le système d'alimentation en carburant comporte en outre une vanne d'arrêt, située entre ledit échangeur thermique et ledit clapet anti-retour, comportant un dixième orifice d'entrée fluidiquement relié audit quatrième orifice de sortie dudit échangeur thermique et un dixième orifice de sortie fluidiquement relié audit cinquième orifice d'entrée dudit clapet anti-retour.

Selon un aspect particulier de l'invention, le système d'alimentation en carburant comporte en outre au moins un capteur de température et/ou un capteur de pression.

L'invention concerne également un système de propulsion pour aéronef comportant un système d'alimentation de carburant tel que décrit précédemment, ainsi qu'un aéronef comportant au moins un tel système de propulsion.

L'invention concerne en outre un procédé de fonctionnement d'un système d'alimentation en carburant tel que décrit précédemment, où le procédé comporte les étapes de :
- maintien de la température de ladite pompe basse pression à une température inférieure à 200 K ;
- refroidissement de ladite pompe basse pression par circulation dudit dihydrogène liquide provenant dudit réservoir dans ladite pompe basse pression jusqu'à ce que la température de ladite pompe basse pression soit inférieure à 30 K ;
- mise sous pression dudit système d'alimentation en carburant par injection dudit dihydrogène liquide à partir dudit réservoir dans ledit système jusqu'à ce qu'une pression au sein dudit réservoir tampon soit supérieure ou égale à 0,1 MPa ;
- alimentation en dihydrogène de ladite chambre de combustion lors du démarrage et du fonctionnement dudit système de propulsion ;
- refroidissement dudit système d'alimentation en carburant.

Selon un aspect particulier de l'invention, le refroidissement du système d'alimentation en carburant comporte le refroidissement de la pompe haute pression et de la circuiterie associée, afin d'atteindre un état "prêt pour le décollage" de l'aéronef, lorsque tout le système d'alimentation en carburant a atteint son état de fonctionnement nominal.

Selon un aspect particulier de l'invention, lors desdites étapes de refroidissement de ladite pompe basse pression et de refroidissement dudit système, ledit dihydrogène circulant à partir dudit réservoir et traversant ladite pompe basse pression circule ensuite ledit circuit de recirculation pour retourner dans ledit réservoir si la température dudit dihydrogène en sortie de ladite pompe basse pression est inférieure à 150 K, de préférence inférieure à 30 K.

Selon un autre aspect particulier de l'invention, lors desdites étapes de refroidissement de ladite pompe basse pression et de refroidissement dudit système, ledit dihydrogène circulant à partir dudit réservoir et traversant ladite pompe basse pression circule ensuite dans un circuit de mise à l'air libre dudit réservoir si la température dudit dihydrogène en sortie de ladite pompe basse pression est supérieure à 30K, de préférence supérieure à 150 K.

Selon encore un autre aspect particulier de l'invention, lors desdites étapes de refroidissement de ladite pompe basse pression et de refroidissement dudit système, une fraction du dihydrogène circulant à partir dudit réservoir et traversant ladite pompe basse pression circule ensuite dans ledit circuit de recirculation pour retourner dans ledit réservoir si la température dudit dihydrogène en sortie de ladite pompe basse pression est inférieure à 150 K, et une fraction du dihydrogène circulant à partir dudit réservoir et traversant ladite pompe basse pression circule ensuite dans un circuit de mise à l'air libre dudit réservoir si la température dudit dihydrogène en sortie de ladite pompe basse pression est supérieure à 150 K.

Selon encore un autre aspect particulier de l'invention, lors desdites étapes de refroidissement de ladite pompe basse pression et de refroidissement dudit système, une fraction du dihydrogène circulant à partir dudit réservoir et traversant ladite pompe basse pression circule ensuite dans ledit circuit de recirculation pour retourner dans ledit réservoir si la température dudit dihydrogène en sortie de ladite pompe basse pression est inférieure à 30 K, et une fraction du dihydrogène circulant à partir dudit réservoir et traversant ladite pompe basse pression circule ensuite dans un circuit de mise à l'air libre dudit réservoir si la température dudit dihydrogène en sortie de ladite pompe basse pression est supérieure à 30 K.

Selon un autre aspect particulier de l'invention, ladite étape de mise sous pression dudit système comporte une sous-étape de maintien de ladite pression du système à une pression comprise entre 0,1 MPa et 5 MPa durant laquelle ladite vanne de régulation de débit et ladite vanne d'arrêt sont fermées.

Ce procédé permet avantageusement de refroidir la pompe haute pression pour pouvoir l'utiliser pour le décollage de l'aéronef. La pompe haute pression est ainsi allumée à la fin du procédé, lorsque le système est dans son état "prêt pour le décollage" de l'aéronef, c'est-à-dire lorsque le système est entièrement refroidi.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
[Fig. 1] est une vue de dessus d'un aéronef selon l'invention ;
[Fig. 2] est une vue schématique d'un système d'alimentation de carburant selon l'invention ; et
[Fig. 3] est un diagramme illustrant schématiquement les étapes d'un procédé de fonctionnement du système d'alimentation de carburant de la Fig. 2.

### EXPOSÉ DÉTAILLÉ D'UN EXEMPLE DE RÉALISATION

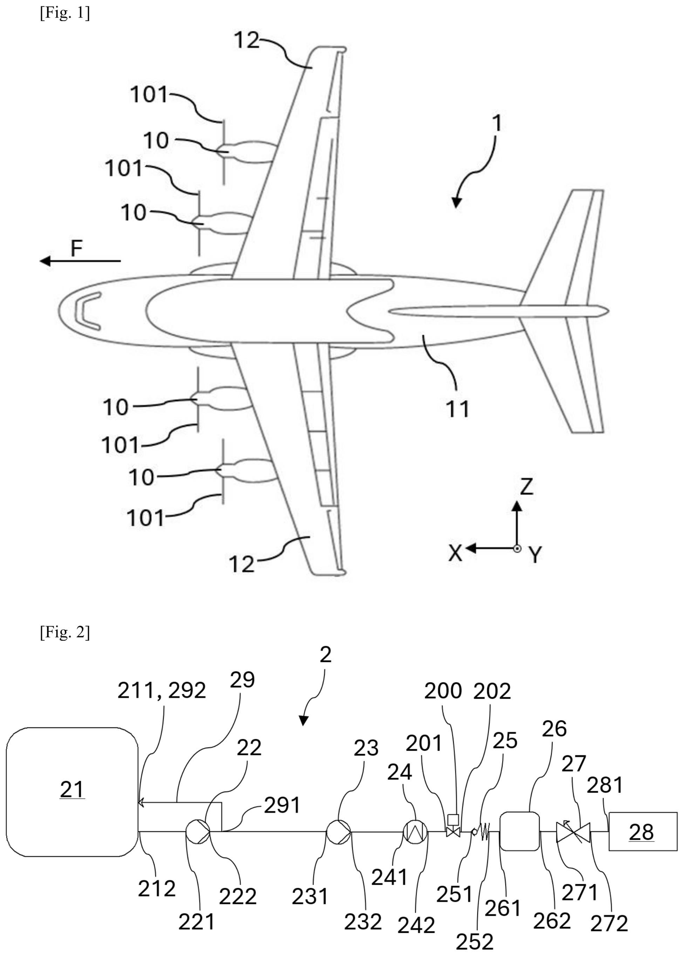

La Fig. 1 montre un aéronef 1 qui présente un fuselage 11 de part et d'autre duquel est fixée une aile 12. Sous chaque aile 12 est fixé au moins un système de propulsion 10 selon l'invention.

Par convention, on appelle X la direction longitudinale de l'aéronef 1, Y la direction transversale de l'aéronef 1 qui est horizontale lorsque l'aéronef 1 est au sol, et Z la direction verticale ou hauteur verticale lorsque l'aéronef 1 est au sol, ces trois directions X, Y et Z étant orthogonales entre elles.

D'autre part, les termes " avant " et " arrière " sont à considérer par rapport à une direction d'avancement de l'aéronef 1 lors du fonctionnement des systèmes de propulsion 10, cette direction étant représentée schématiquement par la flèche F.

Dans le mode de réalisation de l'invention présenté ici, le système de propulsion 10 prend la forme d'un moteur à combustion interne comportant une hélice 101 montée sur l'arbre moteur du moteur à combustion interne qui utilise du dihydrogène comme carburant. On comprend bien évidemment que le système 10 de propulsion de l'invention pourrait aussi être mis en œuvre avec un turboréacteur.

Le système de propulsion 10 comporte un système 2 d'alimentation de carburant, illustré sur la Fig. 2. En particulier, le système 2 d'alimentation de carburant (ci-après appelé « le système ») comporte successivement (c'est-à-dire en série) et reliés fluidiquement :
- un réservoir 21 cryogénique contenant du carburant, et plus précisément du dihydrogène à l'état liquide dans cet exemple ;
- une pompe basse pression 22 ;
- une pompe haute pression 23 ;
- un échangeur thermique 24 configuré pour évaporer et amener le dihydrogène à une température prédéterminée avant injection dans la chambre de combustion (le système de propulsion étant configuré pour fonctionner à une température prédéterminée d'injection du dihydrogène) ;
- un clapet anti-retour 25 ;
- un réservoir tampon 26 destiné à contenir du dihydrogène à l'état gazeux ;
- une vanne de régulation de débit 27 ; et
- une chambre de combustion 28.

Le système 2 comporte en outre un circuit de recirculation 29 reliant la sortie de la pompe basse pression 22 et le réservoir 21.

Un tel système 2 permet d'optimiser l'utilisation du dihydrogène pour le refroidissement du système d'alimentation en carburant. En effet, grâce à un tel système 2, il est possible de recycler au moins une partie du dihydrogène utilisé pour le refroidissement, minimisant ainsi la quantité de dihydrogène rejetée dans l'atmosphère au cours du refroidissement. De cette manière, l'impact sur le climat et les risques de sécurité sont limités.

En particulier, il est important de réduire les oscillations de la pression dans la chambre de combustion 28. Ainsi, le clapet anti-retour 25 permet de bloquer le flux inverse de dihydrogène dans le cas où l'alimentation en dihydrogène provenant du réservoir 21 serait à une pression inférieure à celle du réservoir tampon 26. De plus, le réservoir tampon 26 permet de réduire l'amplitude des oscillations grâce à la compressibilité de l'hydrogène gazeux dans le réservoir tampon 26. Enfin, la vanne de régulation de débit 27 permet de réduire davantage les oscillations lorsque la pression au sein du réservoir tampon 26 est supérieure à la pression de démarrage requise par le moteur du système de propulsion 10.

Plus précisément, les différents composants du système 2 sont reliés fluidiquement par des conduites ou tuyaux. Ainsi, le réservoir 21 cryogénique comporte un premier orifice d'entrée 211 et un premier orifice de sortie 212. La pompe basse pression 22, située en aval du réservoir 21, comporte un deuxième orifice d'entrée 221 fluidiquement relié au premier orifice de sortie 212 du réservoir 21. La pompe basse pression 22 comporte en outre un deuxième orifice de sortie 222. La pompe haute pression 23, située en aval de la pompe basse pression 22, comporte un troisième orifice d'entrée 231 fluidiquement relié au deuxième orifice de sortie 222 de la pompe basse pression 22. La pompe haute pression 23 comporte en outre un troisième orifice de sortie 232. L'échangeur thermique 24, situé en aval de la pompe haute pression 23 comporte un quatrième orifice d'entrée 241 fluidiquement relié au troisième orifice de sortie 232 de la pompe haute pression 23. L'échangeur thermique 24 comporte en outre un quatrième orifice de sortie 242. Le clapet anti-retour 25, situé en aval de l'échangeur thermique 24, comporte un cinquième orifice d'entrée 251 fluidiquement relié au quatrième orifice de sortie 242 de l'échangeur thermique 24. Le clapet anti-retour comporte en outre un cinquième orifice de sortie 252. Le réservoir tampon 26, situé en aval du clapet anti-retour 25, comporte un sixième orifice d'entrée 261 fluidiquement relié au cinquième orifice de sortie 252 du clapet anti-retour 25. Le réservoir tampon 26 comporte en outre un sixième orifice de sortie 262. La vanne de régulation de débit 27, située en aval du réservoir tampon 26, comporte un septième orifice d'entrée 271 fluidiquement relié au sixième orifice de sortie 262 du réservoir tampon 26. La vanne de régulation de débit 27 comporte également un septième orifice de sortie 272. La chambre de combustion 28, située en aval de la vanne de régulation de débit 27, comporte un huitième orifice d'entrée 281 fluidiquement relié au septième orifice de sortie 272 de la vanne de régulation de débit 27. Enfin, le circuit de recirculation 29 comporte un neuvième orifice d'entrée 291 fluidiquement relié au deuxième orifice de sortie 222 de la pompe basse pression 22 et un neuvième orifice de sortie 292 fluidiquement relié au premier orifice d'entrée 211 du réservoir 21.

Dans une variante de réalisation de l'invention, comme détaillé ci-après en relation avec la description du procédé de fonctionnement du système 2, le système 2 peut en outre comporter une vanne d'arrêt 200, située entre l'échangeur thermique 24 et le clapet anti-retour 25. La vanne d'arrêt comporte un dixième orifice d'entrée 201 fluidiquement relié au quatrième orifice de sortie 242 de l'échangeur thermique 24 et un dixième orifice de sortie 202 fluidiquement relié au cinquième orifice d'entrée 251 du clapet anti-retour 25.

Cette vanne d'arrêt 200 est mise en œuvre dans le cas où des oscillations lors de l'alimentation en carburant ne sont pas compatibles avec la séquence de démarrage du système de propulsion 10 de l'aéronef 1 mais que ces oscillations sont compatibles avec la condition de ralenti. Dans ce cas, la vanne d'arrêt est ajoutée pour isoler le réservoir tampon 26 contenant du dihydrogène à l'état gazeux et l'aval du reste du système. Cette vanne d'arrêt 200 est donc fermée uniquement pendant la phase de démarrage du système de propulsion 10. Bien que non décrites, d'autres valves pourraient être mises en œuvre dans le système 2 afin de contrôler le débit massique et la pression d'alimentation de carburant pendant la séquence de démarrage du système de propulsion 10.

D'autres composants, tels que des capteurs de température et/ou de pression peuvent être mis en œuvre au sein des composants du système 2 ou à proximité de ces derniers afin de permettre le contrôle du système 2, notamment suivant le procédé de fonctionnement décrit ci-après. Par exemple, un capteur de température de la pompe basse pression, un capteur de pression agencé dans le réservoir tampon, et un capteur de température de la pompe haute pression, peuvent être agencés pour permettre le contrôle du système 2.

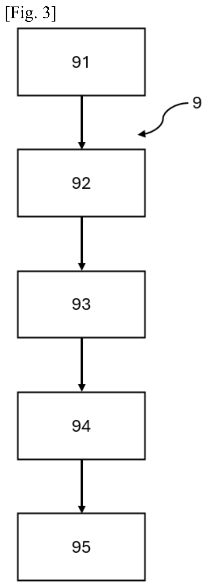

L'invention prévoit également un procédé 9 de fonctionnement du système 2 d'alimentation en carburant décrit précédemment. Ce procédé 9, illustré sur la Fig. 3, comporte ainsi les étapes de :
- maintien 91 de la température de la pompe basse pression 22 à une température inférieure à 200 K ;
- refroidissement 92 de la pompe basse pression 22 par circulation du dihydrogène liquide provenant du réservoir 21 dans la pompe basse pression 22 jusqu'à ce que la température de la pompe basse pression 22 soit inférieure à 30 K ;
- mise sous pression 93 du système 2 d'alimentation en carburant par injection du dihydrogène liquide à partir du réservoir 21 dans le système 2 jusqu'à ce qu'une pression au sein du réservoir tampon 26 soit supérieure ou égale à 0,1 MPa ;
- alimentation 94 en dihydrogène de la chambre de combustion 28 lors du démarrage et du fonctionnement dudit système de propulsion 10 ;
- refroidissement 95 du système 2 d'alimentation en carburant.

La température de la pompe basse pression 22 est maintenue, lors de l'étape 91, à une température compatible avec un allumage de la pompe basse pression, c'est-à-dire entre 20 K et 200 K.

La température de la pompe basse pression 22 est refroidie, lors de l'étape 92, à une température inférieure ou égale à la température de saturation du dihydrogène à la pression du système 2 d'alimentation en carburant afin d'atteindre une température d'opération compatible avec un pompage de dihydrogène liquide, c'est-à-dire entre 20 K et 30 K.

La pression au sein du réservoir tampon 26 est augmentée, lors de l'étape 93, jusqu'à obtenir une pression compatible avec le démarrage du système propulsif ou une pression égale à la pression d'opération classique, c'est-à-dire entre 0,1 MPa et 5 MPa.

Ces étapes de fonctionnement du système 2 d'alimentation de carburant permettent d'optimiser la consommation de dihydrogène pour refroidir le système 2, tout en assurant un fonctionnement optimal du système de propulsion 10.

Plus particulièrement, l'étape de maintien 91 de la température de la pompe basse pression 22 à une température inférieure à 200 K correspond au maintien d'un état initial du système 2, avant que ce dernier ne soit activé, c'est-à-dire sollicité, par le système de propulsion 10. En d'autres termes, le moteur du système de propulsion 10 est ici à l'arrêt. Dans cet état initial, il est nécessaire que la pompe basse pression 22 soit toujours maintenue à une température suffisamment froide permettant de générer un débit massique de refroidissement. De préférence, la pompe basse pression 22 est située à proximité du réservoir 21. Ainsi, la pompe basse pression 22 sera capable, lors de sa sollicitation, de créer un débit massique de refroidissement avec une augmentation de pression réduite à une température moyenne dans laquelle le dihydrogène pourra se vaporiser au contact de la surface de la pompe basse pression. De préférence, la pompe basse pression 22 est maintenue à une température comprise entre 30 K et 200 K.

Pour ce faire, une isolation importante est mise en œuvre entre la pompe basse pression 22 et les conditions ambiantes (c'est-à-dire l'environnement extérieur au système 2) afin d'abaisser la température d'équilibre de la pompe basse pression 22 lorsqu'il n'y a pas de débit provenant du réservoir 21 et que le réservoir 21 est plein de dihydrogène liquide. Si nécessaire (c'est-à-dire si les conditions ambiantes sont favorables), l'isolation peut être réduite entre le réservoir 21 et la pompe basse pression 22.

Lors de l'étape de maintien 91 de la température de la pompe basse pression 22, la pompe haute pression 23 est arrêtée et la vanne de régulation de débit 27 est fermée. La température du réservoir 21 cryogénique est inférieure à environ 20K (ce qui est le cas durant tout le procédé 9).

Lors de l'étape de refroidissement 92 de la pompe basse pression 22, du dihydrogène liquide circule donc depuis le réservoir 21 à travers la pompe basse pression 22 puis dans le circuit de recirculation 200. Cette étape 92 s'effectue, comme précédemment, avant le démarrage du moteur du système de propulsion 10. La pompe basse pression 22 est refroidie jusqu'à la température de fonctionnement (c'est-à-dire à une température inférieure à 30K) grâce à la circulation du dihydrogène liquide à travers la pompe basse pression 22. Le dihydrogène liquide traversant la pompe basse pression 22 est ensuite redirigé, le cas échéant comme décrit ci-après, vers le réservoir 21 de sorte à optimiser la consommation de dihydrogène et éviter les rejets de dihydrogène dans l'atmosphère. Comme lors de l'étape précédente 91, la pompe haute pression 23 est arrêtée et la vanne de régulation de débit 27 est fermée. À la fin de l'étape de refroidissement 92, la pompe basse pression 22 est à la température souhaitée. Lors de l'étape de mise sous pression 93 du système 2 d'alimentation en carburant, du dihydrogène liquide est injecté dans le système 2 à partir du réservoir 21. Ici, la pompe haute pression 23 est arrêtée et la vanne de régulation de débit 27 est toujours fermée. Cela permet de remplir et de mettre sous pression le réservoir tampon 26 avec du dihydrogène gazeux sous pression. En effet, lors de cette étape 93, bien que la température de la pompe basse pression soit toujours inférieure à 30K, le reste du système 2 (sauf le réservoir 21 évidemment) est à une température supérieure à 300 K (ce qui correspond globalement à la température ambiante). Le dihydrogène est alors sous sa forme gazeuse, ce qui permet de remplir et mettre sous pression le réservoir tampon 26. La pompe basse pression 22 est capable de mettre sous pression le système 2 à une pression plus élevée que celle requise pendant la phase de démarrage (ce qui permet le démarrage, ou d'initier plusieurs tentatives de démarrage).

Il est à noter que l'étape de mise sous pression 93 du système 2 comporte une sous-étape de maintien de la pression du système à une pression comprise entre 0,1 MPa et 5 MPa durant laquelle la vanne de régulation de débit 27 et la vanne d'arrêt 200 (lorsqu'elle est mise en œuvre) sont fermées. Cela permet de maintenir la pression dans le réservoir tampon 26 jusqu'à l'étape suivante 94 en gardant la pompe basse pression 22 active. Ainsi, entre l'étape de mise sous pression 93 et l'étape d'alimentation 94, le procédé comprend une étape d'attente, c'est-à-dire une étape de temporisation, de manière à ce que la pression du système 2 soit maintenue à une pression prédéterminée pendant une durée prédéterminée, avant le démarrage du système propulsif. La pompe basse pression 22 est ainsi maintenue active pour être prête au démarrage du système propulsif et pour maintenir en froid la zone déjà refroidie. La pompe haute pression 23 est toujours désactivée.

Lors de l'étape d'alimentation 94 en dihydrogène de la chambre de combustion 28, le démarrage du moteur du système de propulsion 10 s'effectue de préférence uniquement à partir du dihydrogène gazeux contenu dans le réservoir tampon 26. Ensuite, la vanne de régulation de débit 27 est ouverte pour permettre l'injection de dihydrogène et stabiliser le ralenti du moteur du système de propulsion 10. Lorsque la vanne d'arrêt 200 est mise en œuvre, cette dernière est ouverte de sorte que le débit massique du réservoir 21 soit rétabli, tout comme le refroidissement du système 2.

Lors de l'étape de refroidissement 95 du système d'alimentation en carburant, le circuit entre la sortie 222 de la pompe basse pression 22 et la sortie 232 de la pompe haute pression 23, ou l'entrée 241 de l'échangeur thermique 24, est refroidi progressivement jusqu'à ce que la température soit compatible avec un démarrage de la pompe haute pression 23 et avec son utilisation lors du décollage de l'aéronef. L'hydrogène gazeux créé par ce refroidissement est consommé par le système propulsif en régime ralenti ("Idle" en terminologie anglaise). Ainsi, le dihydrogène présent dans le système 2 à l'issue de l'étape 94 est utilisé pour refroidir le reste du système 2 d'alimentation en carburant, par exemple pendant le roulage (c'est-à-dire la phase dite « taxi ») et avant la phase de décollage de l'aéronef 1. Ainsi, tout le dihydrogène utilisé pour le refroidissement est consommé par le moteur du système propulsion 10 et est considéré comme utile pour la phase de roulage de l'aéronef 1.

Il est à noter que l'état « prêt pour le décollage » est obtenu lorsque la pompe haute pression 23 est à la température de fonctionnement et que les oscillations de pression sont considérées comme étant dans les conditions de fonctionnement.

Selon une configuration optionnelle, le système 2 comprend un système de refroidissement actif du dihydrogène dans le réservoir 21. En variante, le réservoir 21 présente une isolation thermique importante configurée pour permettre un maintien de la température du dihydrogène.

Dans un système 2 en présence de dihydrogène, il est défini un capital "masse" du dihydrogène et un capital "froid" du dihydrogène. Le capital "masse" correspond à la quantité de dihydrogène disponible dans le réservoir 21. Le capital "froid" correspond à la température du dihydrogène présent dans le réservoir 21. Il est nécessaire de gérer en même temps le capital "masse" et le capital "froid" du dihydrogène dans le système 2.

Dans le système 2, le dihydrogène liquide contenu dans le réservoir 21 est utilisé pour refroidir le reste du système 2 (pompe basse pression, pompe haute pression, tuyauterie, vannes, etc.). Ainsi, une partie des capitaux "masse" et "froid" du dihydrogène est utilisée pour refroidir le reste du système 2. Pour son introduction dans la chambre de combustion 28, le dihydrogène s'est ainsi réchauffé et gazéifié.

Selon un premier mode de réalisation, et afin de limiter les rejets de dihydrogène dans l'atmosphère (et de préserver le capital "masse" du dihydrogène, c'est-à-dire d'une certaine quantité de dihydrogène dans le système 2), lors des étapes de refroidissement 92 de la pompe basse pression 22 et de refroidissement 95 du système 2, le dihydrogène circulant à partir du réservoir 21 et traversant la pompe basse pression 22 circule ensuite dans le circuit de recirculation 29 pour retourner dans le réservoir 21, si la température du dihydrogène en sortie de la pompe basse pression 22 est inférieure à une température maximale par exemple inférieure à 300 K, de préférence inférieure à 150 K, encore plus préférentiellement inférieure à 30 K.

Dans le circuit de recirculation 29, la température du dihydrogène est compatible avec une réinjection du dihydrogène dans le réservoir 21, c'est-à-dire inférieure à 300 K, par exemple aux alentours de 150 K. Plus précisément, le dihydrogène est à une température inférieure à la température maximale acceptable par le réservoir 21 pour y être retourné, c'est-à-dire inférieure à 300 K, et de préférence inférieure à 150 K.

De cette manière, le système 2 permet de recycler le dihydrogène utilisé pour refroidir la pompe basse pression 22 (c'est-à-dire de réinjecter le dihydrogène réchauffé dans le réservoir 21) à condition que le dihydrogène ne soit pas trop chaud. En effet, cela permet d'optimiser la consommation de dihydrogène et minimiser les rejets de dihydrogène dans l'atmosphère. Ce mode de réalisation permet avantageusement de favoriser le capital "masse" du dihydrogène, plutôt que son capital "froid".

Selon un deuxième autre mode de réalisation, afin d'optimiser la consommation de dihydrogène lors du refroidissement, lors des étapes de refroidissement 92 de la pompe basse pression 22 et de refroidissement 95 du système 2, le dihydrogène circulant à partir du réservoir 21 et traversant la pompe basse pression 22 circule ensuite dans un circuit de mise à l'air libre du réservoir 21 si la température du dihydrogène en sortie de la pompe basse pression 22 est supérieure à une température minimale, par exemple supérieure à 30 K, de préférence supérieure à 150K, et encore plus préférentiellement supérieure à 300K.

Dans le circuit de mise à l'air libre du réservoir 21, la température du dihydrogène est généralement supérieure à 30 K, par exemple aux alentours de 150 K. Plus précisément, le dihydrogène est à une température supérieure à la température maximale acceptable par le réservoir 21 pour une réinjection (le réservoir 21 supportant du dihydrogène en réinjection entre 30 K et 300 K).

De cette manière, le système 2 permet d'évacuer le dihydrogène trop chaud, ce qui permet d'éviter d'entamer trop fortement le capital "froid" du dihydrogène. De plus, cela permet aussi d'optimiser la consommation de dihydrogène. Ce mode de réalisation permet avantageusement de favoriser le capital "froid" du dihydrogène (température du dihydrogène dans le réservoir 21), plutôt que son capital "masse". En effet, si le dihydrogène est trop chaud, on préserve le capital "froid" du dihydrogène en rejetant le dihydrogène réchauffé vers un système de traitement puis dans l'atmosphère (via le circuit de mise à l'air libre).

Selon un troisième mode de réalisation, et afin d'optimiser la consommation de dihydrogène lors du refroidissement, et donc de sorte à limiter les rejets de dihydrogène dans l'atmosphère, lors des étapes de refroidissement 92 de la pompe basse pression 22 et de refroidissement 95 du système 2, une fraction du dihydrogène circulant à partir du réservoir 21 et traversant la pompe basse pression 22 circule ensuite :
- dans le circuit de recirculation 29 pour retourner dans le réservoir 21, si la température du dihydrogène en sortie de la pompe basse pression 22 est inférieure à une température seuil prédéterminée, et
une autre fraction du dihydrogène circulant à partir du réservoir 21 et traversant la pompe basse pression 22 circule ensuite:
- dans un circuit de mise à l'air libre du réservoir 21 si la température du dihydrogène en sortie de la pompe basse pression 22 est supérieure à la température seuil prédéterminée.

La température seuil prédéterminée peut être égale à 30K, ou de préférence égale à 150K. Ainsi, une fraction du dihydrogène retourne au réservoir 21 (préservation du capital "masse" du dihydrogène) et une autre fraction du dihydrogène est rejetée dans l'atmosphère (préservation du capital "froid" du dihydrogène).

De cette manière, le système 2 permet de recycler une partie du dihydrogène utilisé pour refroidir la pompe basse pression 22 à condition que le dihydrogène ne soit pas trop chaud. En effet, cela permet d'optimiser la consommation de dihydrogène et de minimiser les rejets de dihydrogène dans l'atmosphère.

En fonction des besoins du système 2, on optimise soit l'utilisation du capital "masse" du dihydrogène (le dihydrogène tiède est réinjecté dans le réservoir 21, ce qui le réchauffe un peu), soit l'utilisation du capital "froid" du dihydrogène (le dihydrogène est rejeté dans l'atmosphère). La température du dihydrogène après utilisation sert de critère pour cette optimisation.

## Revendications

1. Système (2) d'alimentation de carburant pour un système de propulsion (10) pour aéronef (1) comportant :
- un réservoir (21) cryogénique contenant du carburant, où ledit carburant est du dihydrogène liquide, ledit réservoir (21) cryogénique comportant un premier orifice d'entrée (211) et un premier orifice de sortie (212) ;
- une pompe basse pression (22), située en aval dudit réservoir (21), comportant un deuxième orifice d'entrée (221) fluidiquement relié audit premier orifice de sortie (212) dudit réservoir (21) et un deuxième orifice de sortie (222) ;
- une pompe haute pression (23), située en aval de ladite pompe basse pression (22), comportant un troisième orifice d'entrée (231) fluidiquement relié audit deuxième orifice de sortie (222) de ladite pompe basse pression (22) et un troisième orifice de sortie (232) ;
- un échangeur thermique (24), situé en aval de ladite pompe haute pression (23) comportant un quatrième orifice d'entrée (241) fluidiquement relié audit troisième orifice de sortie (232) de ladite pompe haute pression (23) et un quatrième orifice de sortie (242) ;
- un clapet anti-retour (25), situé en aval dudit échangeur thermique (24), comportant un cinquième orifice d'entrée (251) fluidiquement relié audit quatrième orifice de sortie (242) dudit échangeur thermique (24) et un cinquième orifice de sortie (252) ;
- un réservoir tampon (26) destiné à contenir du dihydrogène gazeux, ledit réservoir tampon (26) étant situé en aval dudit clapet anti-retour (25) et comportant un sixième orifice d'entrée (261) fluidiquement relié audit cinquième orifice de sortie (252) dudit clapet anti-retour (25) et un sixième orifice de sortie (262) ;
- une vanne de régulation de débit (27), située en aval dudit réservoir tampon (26), comportant un septième orifice d'entrée (271) fluidiquement relié audit sixième orifice de sortie (262) dudit réservoir tampon (26) et un septième orifice de sortie (272) ;
- une chambre de combustion (28), située en aval de ladite vanne de régulation de débit (27), comportant un huitième orifice d'entrée (281) fluidiquement relié audit septième orifice de sortie (272) de ladite vanne de régulation de débit (27) ; et
- un circuit de recirculation (29) comportant un neuvième orifice d'entrée (291) fluidiquement relié audit deuxième orifice de sortie (222) de ladite pompe basse pression (22) et un neuvième orifice de sortie (292) fluidiquement relié audit premier orifice d'entrée (211) dudit réservoir (21).

2. Système (2) selon la revendication 1, **caractérisé en ce qu'**il comporte en outre une vanne d'arrêt (200), située entre ledit échangeur thermique (24) et ledit clapet anti-retour (25), comportant un dixième orifice d'entrée (201) fluidiquement relié audit quatrième orifice de sortie (242) dudit échangeur thermique (24) et un dixième orifice de sortie (202) fluidiquement relié audit cinquième orifice d'entrée (251) dudit clapet anti-retour (25).

3. Système (2) selon la revendication 1 ou 2, **caractérisé en ce qu'**il comporte en outre au moins un capteur de température et/ou un capteur de pression.

4. Système de propulsion (10) pour aéronef (1), **caractérisé en ce que** ledit système de propulsion (10) comporte un système (2) d'alimentation de carburant selon l'une des revendications 1 à 3.

5. Aéronef (1) comportant au moins un système de propulsion (10) selon la revendication 4.

6. Procédé (9) de fonctionnement d'un système d'alimentation en carburant selon l'une des revendications 1 à 3, **caractérisé en ce que** le procédé (9) comporte les étapes de :
- maintien (91) de la température de ladite pompe basse pression (22) à une température inférieure à 200 K ;
- refroidissement (92) de ladite pompe basse pression (22) par circulation dudit dihydrogène liquide provenant dudit réservoir (21) dans ladite pompe basse pression (22) jusqu'à ce que la température de ladite pompe basse pression (22) soit inférieure à 30 K ;
- mise sous pression (93) dudit système (2) d'alimentation en carburant par injection dudit dihydrogène liquide à partir dudit réservoir (21) dans ledit système (2) jusqu'à ce qu'une pression au sein dudit réservoir tampon (26) soit supérieure ou égale à 0,1 MPa ;
- alimentation (94) en dihydrogène de ladite chambre de combustion (28) lors du démarrage et du fonctionnement dudit système de propulsion (10) ;
- refroidissement (95) dudit système (2) d'alimentation en carburant.

7. Procédé (9) selon la revendication 6, **caractérisé en ce que**, lors desdites étapes de refroidissement (92) de ladite pompe basse pression (22) et de refroidissement (95) dudit système (2), ledit dihydrogène circulant à partir dudit réservoir (21) et traversant ladite pompe basse pression (22) circule ensuite dans ledit circuit de recirculation (29) pour retourner dans ledit réservoir (21) si la température dudit dihydrogène en sortie de ladite pompe basse pression (22) est inférieure à 150 K, de préférence inférieure à 30 K.

8. Procédé (9) selon la revendication 6 ou 7, **caractérisé en ce que**, lors desdites étapes de refroidissement (92) de ladite pompe basse pression (22) et de refroidissement (95) dudit système (2), ledit dihydrogène circulant à partir dudit réservoir (21) et traversant ladite pompe basse pression (22) circule ensuite dans un circuit de mise à l'air libre dudit réservoir (21) si la température dudit dihydrogène en sortie de ladite pompe basse pression (22) est supérieure à 30K, de préférence supérieure à 150 K.

9. Procédé (9) selon l'une des revendication 6 à 8, **caractérisé en ce que**, lors desdites étapes de refroidissement (92) de ladite pompe basse pression (22) et de refroidissement (95) dudit système (2), une fraction du dihydrogène circulant à partir dudit réservoir (21) et traversant ladite pompe basse pression (22) circule ensuite dans ledit circuit de recirculation (29) pour retourner dans ledit réservoir (21) si la température dudit dihydrogène en sortie de ladite pompe basse pression (22) est inférieure à 150 K, et une fraction du dihydrogène circulant à partir dudit réservoir (21) et traversant ladite pompe basse pression (22) circule ensuite dans un circuit de mise à l'air libre dudit réservoir (21) si la température dudit dihydrogène en sortie de ladite pompe basse pression (22) est supérieure à 150 K.

10. Procédé (9) selon l'une des revendication 6 à 8, **caractérisé en ce que**, lors desdites étapes de refroidissement (92) de ladite pompe basse pression (22) et de refroidissement (95) dudit système (2), une fraction du dihydrogène circulant à partir dudit réservoir (21) et traversant ladite pompe basse pression (22) circule ensuite dans ledit circuit de recirculation (29) pour retourner dans ledit réservoir (21) si la température dudit dihydrogène en sortie de ladite pompe basse pression (22) est inférieure à 30 K, et une fraction du dihydrogène circulant à partir dudit réservoir (21) et traversant ladite pompe basse pression (22) circule ensuite dans un circuit de mise à l'air libre dudit réservoir (21) si la température dudit dihydrogène en sortie de ladite pompe basse pression (22) est supérieure à 30 K.

11. Procédé (9) selon l'une des revendications 6 à 10, **caractérisé en ce que**, ladite étape de mise sous pression (93) dudit système (2) comporte une sous-étape de maintien de ladite pression du système à une pression comprise entre 0,1 MPa et 5 Mpa durant laquelle ladite vanne de régulation de débit (27) et ladite vanne d'arrêt (200) sont fermées.
